# EUROPEAN PATENT SPECIFICATION

(11) **EP 4 564 216 B1**
(45) Date of publication and mention of the grant of the patent: **22.04.2026**
(21) Application number: 24215551.3
(22) Date of filing: 26.11.2024
(51) Int. Cl.: G06F 21/75, G06F 21/81

(54) **DETECTION AND MITIGATION OF VOLT BOOT ATTACKS**
ERKENNUNG UND ABSCHWÄCHUNG VON VOLTBOOT-ANGRIFFEN
DÉTECTION ET ATTÉNUATION D'ATTAQUES DE DÉMARRAGE VOLT

(30) Priority: 29.11.2023 IN 202341080963
(43) Date of publication of application: 04.06.2025
(73) Proprietor: NXP B.V., 5656 AG Eindhoven (NL)
(72) Inventor: GHOSH, Prokash, 5656AG Eindhoven (NL); GHOSH, Jyortirmoy, 5656AG Eindhoven (NL); JAIN, Arun, 5656AG Eindhoven (NL); BODE, Hubert Martin, 5656AG Eindhoven (NL); NAWAL, Abhinav, 5656AG Eindhoven (NL)
(74) Representative: Colaiuda, Antonella

(56) References cited:
- US-A1- 2012 105 108
- US-A1- 2021 294 363
- US-A1- 2022 222 339
- MAHMOD JUBAYER JUBAYER@VT EDU ET AL: "SRAM has no chill: exploiting power domain separation to steal on-chip secrets", PROCEEDINGS OF THE 14TH IEEE/ACM INTERNATIONAL CONFERENCE ON UTILITY AND CLOUD COMPUTING COMPANION, ACMPUB27, NEW YORK, NY, USA, 28 February 2022 (2022-02-28), pages 1043 - 1055, XP058862201, ISBN: 978-1-4503-9557-1, DOI: 10.1145/3503222.3507710

## Description

### 1. PREAMBLE

The following specification describes the invention.

### DESCRIPTION

### FIELD

This disclosure relates generally to the power management of electronic circuits, and more specifically to the detection and mitigation of a volt boot attack on a power supply pin used to retain volatile contents of the electronic circuit.

### BACKGROUND

A volt boot attack is an attack of an electronic circuit which seeks to retain, and thereby gain access to, the contents of an embedded volatile storage during power down or during a transition to a low power operating mode. Typically, the volatile storage will store sensitive data (e.g., secret keys), resulting from a secure computation by the electronic circuit. Prior to a power down or entering a low power mode, the attacker will drive a power supply pin with sufficient voltage to keep the data in the volatile storage from decaying and thus becoming corrupted. When the circuit is subsequently powered up again and rebooted, the attacker may then have access to the sensitive data stored in the volatile storage.

Detection of a volt boot attack is difficult because the attack sequence must be distinguished from a normal transition to a low power operation mode and a subsequent recovery when the circuit is to be used for computation. In many electronic systems, for expediency, the system relies upon voltage decay to erase stored data when power is removed, rather than directly performing erase operations in the memory. Furthermore, modern systems often have multiple power domains to optimize various system level use cases, hence transitions between normal operating voltages and low power modes may be frequent and involve numerous combinations of power domains.

The document "SRAM has no Chill: Exploiting Power Domain Separation to Steal On-Chip Secrets" describes the volt bolt attack, in particular its effectiveness in attacking caches, registers and iRAMs.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.
FIG. 1 is a schematic view of an embodiment of an electronic system under attack by a volt boot attack.
FIG. 2 is a schematic view of the embodiment of FIG. 1 with further detail of the Power Management Integrated Circuit (PMIC) and the System on a Chip (SoC) comprising a Power Management Controller (PMC).
FIG. 3 is a flowchart representation of a method of operation of the system of FIG. 2 under attack by a volt boot attack.
FIG. 4 is a schematic view of the electronic system of FIG. 2 further comprising a Secure Probe Management Controller (SPMC), in accordance with an embodiment of the present disclosure.
FIG. 5 is a schematic view of a Secure Probe State Detector (SPSD), in accordance with an embodiment of the present disclosure.
FIG. 6 is a schematic view of a Secure Power Cycle Controller (SPCC), in accordance with an embodiment of the present disclosure.
FIG. 7 is a schematic view of a Re-Powering Cycle Actuator (RPCA), in accordance with an embodiment of the present disclosure.
FIG. 8 is a state diagram representation of the operation of the SPCC of FIG. 6, in accordance with an embodiment of the present disclosure.
FIG. 9 is a state diagram representation of the operation of the embodiment of the PMC of FIG. 2, illustrating the scope of volt boot attacks.
FIG. 10 is a flowchart representation of a method for detection and mitigation of volt boot attacks, in accordance with an embodiment of the present disclosure.
FIG. 11 is a flowchart representation of another method for detection and mitigation of volt boot attacks, in accordance with an embodiment of the present disclosure.
FIG. 12 is a flowchart representation of another method for detection and mitigation of volt boot attacks, in accordance with an embodiment of the present disclosure.

### DETAILED DESCRIPTION

Embodiments described herein provide for the detection and mitigation of volt boot attacks of an electronic circuit (e.g., an SoC). An SoC may store a variety of sensitive data such as passwords, secret encryption keys or security codes. This sensitive data may be stored in volatile storage elements including, but not limited to, a Static Random Access Memory (SRAM), a Dynamic Random Access Memory (DRAM), a Central Processing Unit (CPU), registers or a Cache. Volt boot attacks involve an attacker driving a voltage on a power supply pin to drive at least a minimum retention voltage to retain the sensitive data in the volatile storage during power cycles. Thus, the attacker may gain access to the sensitive data. The embodiments described herein, monitor voltage supply lines during power cycling or low power mode transitions and compare previous and requested supply line states to detect an attempt to override the supply line values otherwise controlled by the SoC. Additionally, after detecting a volt boot attack, a repower cycle may be applied to all power domains of the SoC to force erasure of the sensitive data and thus mitigate the attack.

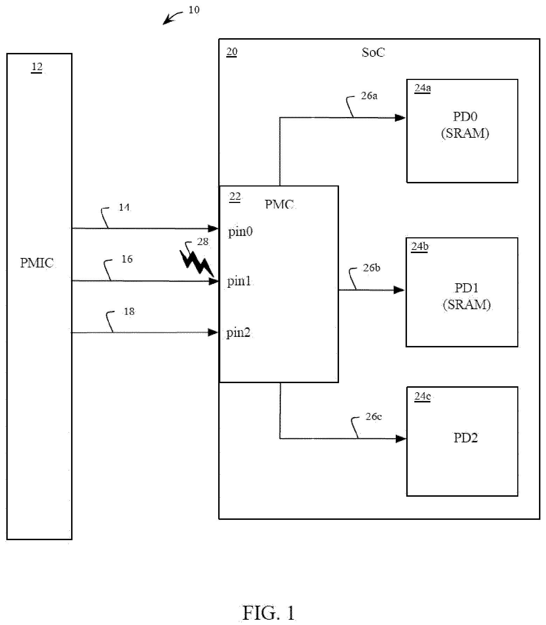

FIG. 1 shows an embodiment 10 of an electronic system under attack by a volt boot attack. The embodiment 10 includes a PMIC 12 to provide supply voltages on pin0 14, pin 1 16 and pin2 18. In the illustrations of this disclosure, three pins and associated power domains are shown for brevity and clarity. It should be understood that other embodiments may have one or more pins and power domains without limit. The PMIC 12 supplies power to an SoC 20, (or similar electronic circuit). Specifically, the SoC 20 receives power from the pins 14, 16 and 18 with a PMC 22. The PMC 22 includes Low Voltage Detectors (LVD) (not shown) and power switches, which then provide controlling voltages to power domains 24a, 24b and 24c (generally 24), over respective nets 26a, 26b and 26c (generally 26). In the embodiment 10, power domains 24a and 24b include respective volatile storage elements (e.g., SRAMs), and where the supply voltage to pin1 16 is maintained above a retention voltage by an attackers probe point 28 regardless of whether the supply voltages from the PMIC 12 are power cycled or transitioned to a lower voltage.

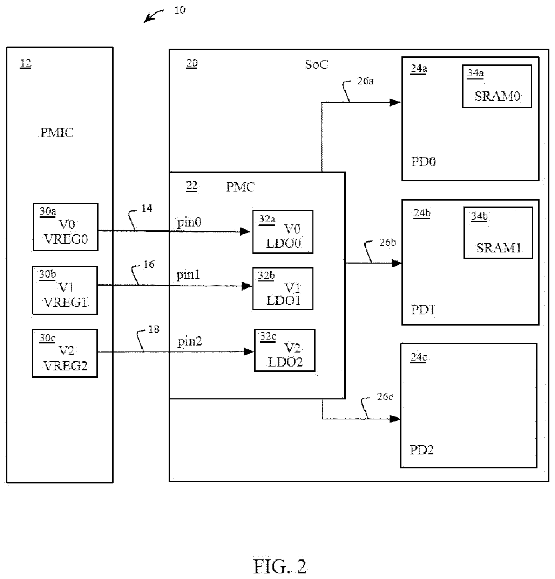

FIG. 2 shows further detail of the embodiment 10 of FIG. 1. In FIG. 2, the PMIC 12 shows the PMIC 12 having voltage regulators 30a, 30b and 30c, (generally 30) to regulate and supply the supply voltages on respective pins 14, 16 and 18. The supply voltages supply respective Low Dropout Oscillators (LDO) 32a, 32b and 32c, (generally 32). The SoC 20 subsequently compares each supply voltage with a respective LVD (not shown) in the SPSD. In this disclosure, the LVDs are located in the SPSD in one non-limiting embodiment, however may be co-located with other functional blocks in other embodiments. The embodiment 10 in FIG. 2 further shows volatile storage elements 34a and 34b, (generally 34) powered by and included within respective power domains 24a and 24b. It should be noted that while the power domain 24c does not include a volatile storage element and thus may not contain sensitive data, the methods for detecting and mitigating a volt boot attack on pin2 18 are applicable to other structures within the power domain 24c that are intentionally altered by a reduction of supply voltage below a predetermined threshold.

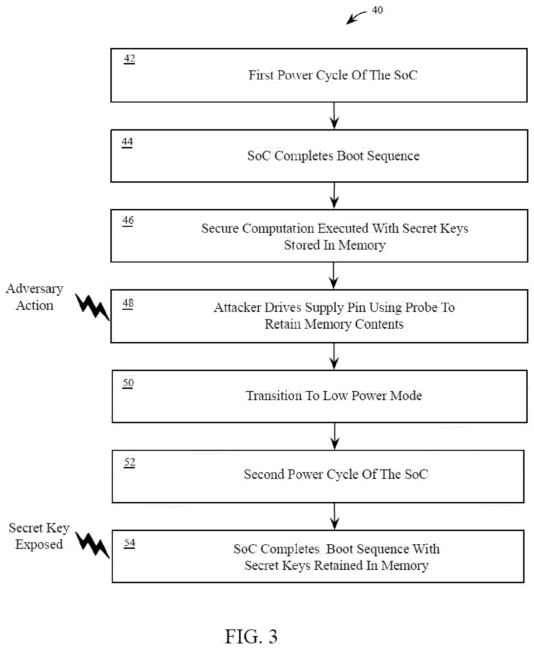

FIG. 3 shows a method 40 of operation of the system of FIG. 2. In one embodiment, an attacker is physically in possession of the SoC 20. Prior to the attack, at 42, a first power cycle of the SoC 20 is performed. At 44, the SoC 20 then completes a boot sequence. At 46, a secure computation may be executed with secret keys (or other sensitive data) stored in a volatile memory. In the absence of an attack, the secret keys may be quickly erased by power cycling the SoC, rather than incurring a penalty (e.g., 10s of seconds) during a boot operation. However, at 48, the attacker performs an adversarial action by driving the supply pin (e.g., pin 16), powering the volatile memory, with a probe to retain the memory contents. At 50, with the probe still driving the supply pin 16, the SoC 20 is transitioned to a low power mode, initiated either by the SoC 20 or the attacker. At 52, a second power cycle of the SoC 20, (or a return from a low power mode to a normal operating mode) is performed. At 54, the SoC 20 may reboot with the secret keys still retained in memory. Thus, the attacker may now access the secret keys from the volatile memory.

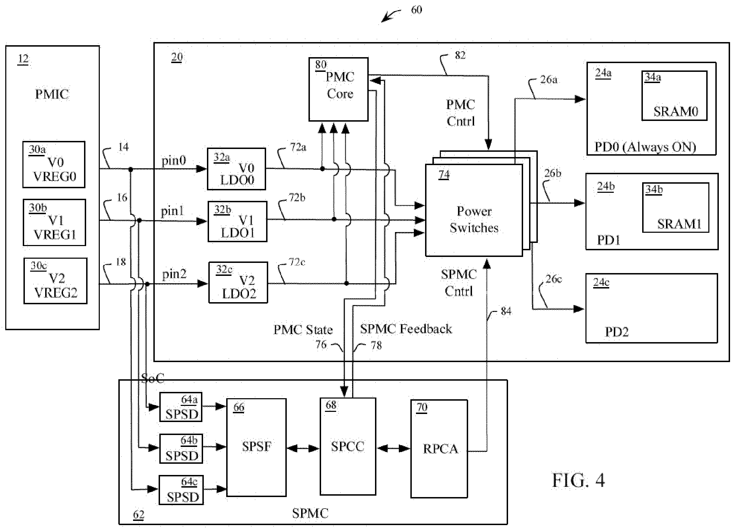

FIG. 4 shows an embodiment 60 of the system of FIG. 2 with an SPMC 62 added for the detection and mitigation of volt boot attacks. In the embodiment 60 of FIG. 4, the boundaries of the SoC 20 are drawn to be consistent with FIG. 1 and FIG. 2. In other embodiments, the various functions PMIC 12, LDO 32, PMC core 80, power switches 74, power domains 24 and the SPMC 62 may be partitioned into separate modules or combined in any combination on one or more monolithic substrates. The SPMC 62 includes an SPSD 64a, 64b and 64c (generally 64) for reach respective pin 14, 16 and 18 and electrically coupled to each respective power domain 24a, 24b and 24c. Each SPSD 64 is configured to generate a flag for each respective power domain 24 to provide an indication of supply voltage status and changes on the pins 14, 16 and 18. Each of the SPSD 64 are connected to an SPSF 66. The SPSF 66 configures an inactive flag from each respective power domain 24 that is not required for the normal mode of operation of the SoC 20. The SPSF 66 further aggregates each flag received from the SPSD 64 that does not have an inactive flag set, to define a previous state for each flag, and sends the flag information to the SPCC 68.

The SPCC 68 receives requested power domain settings from the PMC core 80 over a PMC state bus 76 and provides feedback to the PMC core 80 over an SPMC feedback bus 78. The PMC core 80 requests over a PMC control bus 82, at least one power domain 24 to transition to a lower voltage level, (below the LVD level of the respective LVD). A voltage on pins 14, 16 and 18 that is determined to be below the respective LVD level by the LVD detectors controls a respective LDO 32, the status of which is communicated to the PMC core 80 over respective nets 72a, 72b and 72c (generally 72). The SPCC 68 compares the flag for each power domain 24 transitioned to the lower voltage level to the previous state set by the SPSF 66. If the comparison fails (e.g. a mismatch occurs between the respective flags of the previous state and the requested state), then a volt boot attack is presumed to have occurred on the pin (e.g., 14, 16 or 18) associated with the respective power domain 24. The RPCA 70 will perform a power cycle with all of the power domains 24 in response to a volt boot attack, by controlling a plurality of switches 74 over a SPMC control bus 84. By power cycling all of the power domains 24, including ones not directly attacked, this ensures that sensitive data is not leaked across domains and thus becoming obtained indirectly by the attacker. In one embodiment, power cycling includes reducing the operating voltages of all domains below their respective LVD levels for a predetermined period of time, then restoring the operating voltages to their previous values. The predetermined period of time may be equal to at least the time necessary for a volatile storage to decay to a level where data is unreadable.

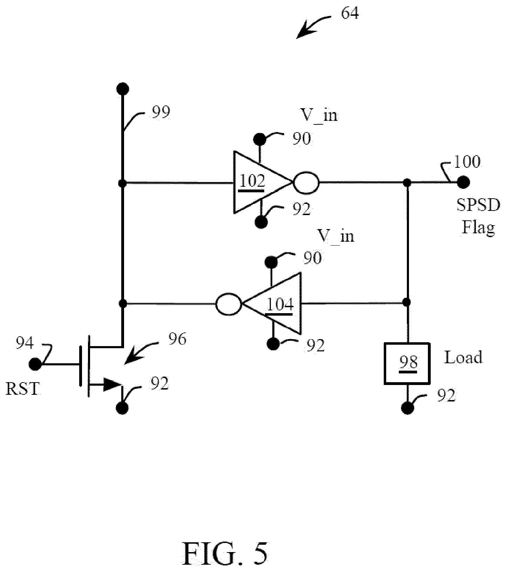

FIG. 5 shows implementation details of one embodiment of the SPSD 64. The SPSD 64 may include a monitored supply 90, which is the positive supply of the inverters 102 and 104 that form a latch. In one embodiment, the SPSD 64 may be connected to a ground terminal 92, which is the negative supply of the inverters 102 and 104. A reset (RST) signal 94 controls a transistor 96 configured to discharge the node 99 towards the ground terminal 92 when the RST signal 94 is a logical "l". A circuit load 98 is between an SPSD flag 100 output and the ground terminal 92.

With reference to FIG. 5 and Table 1 (below), at power-up the monitored supply 90 is initially below a brown-out level (Vbrown), defined as a voltage below the low voltage detection level of the LVDs. Accordingly, the SPSD flag 100 initially discharges to a logical "0". After the power supplies are ramped to an operating voltage above Vbrown and RST is asserted to a logical "1", the transistor 96 will discharge node 99 and cause the latch formed by inverters 102 and 104 to drive the SPSD flag 100 to a logical "1". This may be considered to "arm" the SPSD for the next power cycle. After a subsequent power cycle, the SPCC 68 will read the state of the SPSD flag 100. If the SPSD flag 100 remains at "1" (e.g., not changed to "0"), this implies that the monitored supply 90 did not fall below the Vbrown level and hence a volt boot attack may have occurred. In Table 1, the fourth scenario, where RST is asserted to "1" while the flag is still at "0" is not a valid condition for booting the SOC 20.

**Table 1: SPSD Flag Description**

| Supply Pin | RST | SPSD Flag | Remarks |
|---|---|---|---|
| V_in < Vbrown | 0 | 0 | After power-up, supply is below Vbrown-out, causing SPSD Flag to transition from 1 to 0. |
| V_in > Vbrown | 1 | 1 | With RST asserted by SPCC, SPSD flag transitions to 1, thus is armed for next power cycle. |
| V_in > Vbrown | 0 | 1 | After subsequent power-up, SPCC reads SPSD flags. If flags are not 0, then supply never went below Vbrown-out, thus inferring a volt boot attack. |
| V_in < Vbrown | 1 | 0 | Not valid boot condition with PMC supply removed. |

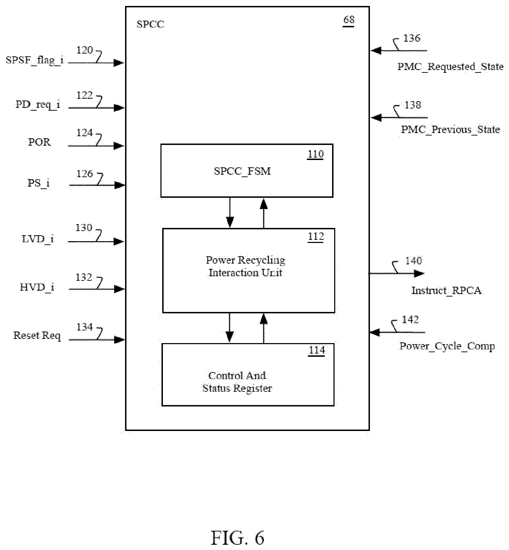

FIG. 6 shows implementation details of one embodiment of the SPCC 68. The SPCC 68 may include a Finite State Machine (FSM), SPCC_FSM 110 to sequence the actions of the SPCC 68. The SPCC_FSM 110 may communicate with a Power Recycling Interaction Unit 112 to communicate with the RPCA 70 during power recycling. The Power Recycling Interaction Unit 112 may communicate with a Control and Status Register 114 configured to assist with control the SPCC 68 and store various status of the SoC 20.

In one embodiment, the SPCC 68 receives a plurality of signals, specifically an SPSF_flag_i 120 from a respective SPSD 64, a PD_req_i 122 from a respective power domain, a POR 124 (power on reset), a PS_i 126 from a respective power switch 74, an LVD_i 130 from a respective LVD, an HVD_i (high voltage detector, not shown) 132 and a Reset Req 134 (reset request) from a PMC core 80. The SPCC 68 receives a PMC_Requested_State 136 and a PMC_Previous_State 138 from the PC core 80. The SPCC 68 transmits an Instruct_RPCA 140, to instruct the RPCA 70, and receives a Power_Cycle_Comp 142 from the RPCA 70 to inform the SPCC 68 when the power cycle has completed so that the PMC core 80 may resume operation depending upon the SPCC severity flag settings.

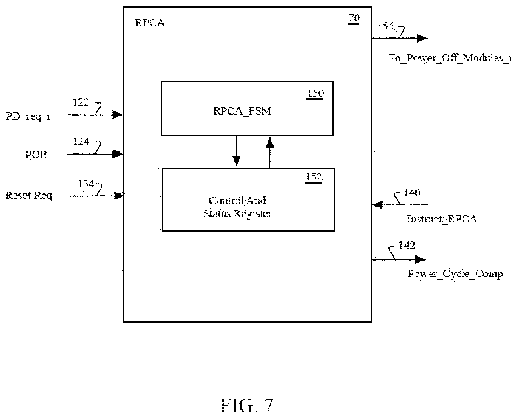

FIG. 7 shows implementation details of one embodiment of the RPCA 70. The RPCA 70 may include an FSM, RPCA_FSM 150 to sequence the actions of the RPCA 70. The RPCA_FSM 150 may communicate with a Control and Status Register 152 configured to assist with control the RPCA 70 and store various status of the SoC 20.

In one embodiment, the RPCA 70 receives a plurality of signals, namely a PD_req_i 122, a POR 124 and a Reset Req 134 as previously described for FIG. 6. The RPCA 70 transmits a "To_Power_Off_Modules_i" 154 signal to a respective power switch 74 for power cycling. The RPCA 70 receives the "Instruct_RPCA" 140 from the SPCC 68 and transmits the "Power_Cycle_Comp" 142 to the SPCC 68.

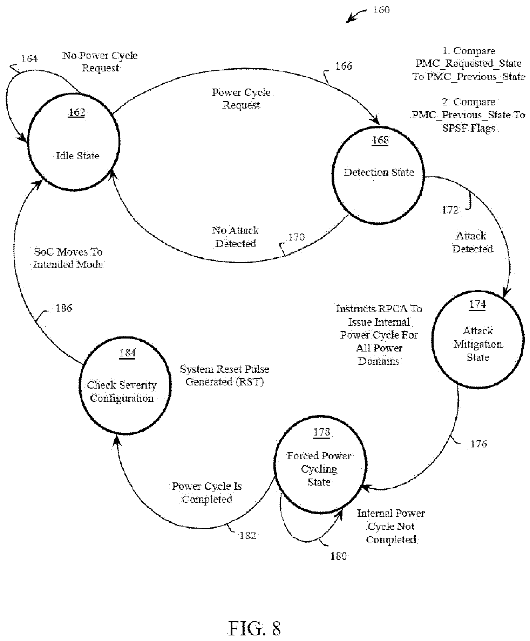

FIG. 8 shows an embodiment 160 of the operation of the SPCC 68 of FIG. 6. At 162, the SPCC 68 begins in an Idle State 162. If no power cycle is requested at 164, the SPCC 68 remains in the Idle State 162. If a power cycle is requested at 166, the SPCC 68 transitions to a Detection State 168. At 168, the SPCC 68 compares a requested state of the PMC to a previous state (as set by the flags from the SPSD 64, which do not include inactive power domains 24). If no volt boot attack is detected the SPCC 68 transitions at 170 back to the Idle State 162. Otherwise, the SPCC 68 transitions at 172 to the Attack Mitigation State 174.

At 174, the SPCC68 instructs the RPCA 70 to perform a power cycle on all power domains 24, then at 176 transitions to the Forced Power Cycling State 178. In one embodiment, the power cycling is performed for a predetermined period of time, during which the SPCC 68 remains in the Forced Power Cycling State 178 as checked at 180. Once the power cycling is complete, the SPCC 68 transitions at 182 to a Check Severity Configuration 184 state, where the system RST 94 is generated and applied. After checking the severity flag settings, the SoC 20 will transition at 186 to the intended operating mode and then return to the Idle State 162.

In one example, a severity flag setting of "11" means that the SoC 20 can return to a normal mode of operation after mitigating the volt boot attack. A severity flag setting of "10" means the SoC 20 can return to a non-secure mode after mitigating the volt boot attack. A severity flag setting of "01" or "00" means that the SoC 20 cannot exit the reset state after detecting the volt boot attack. In one embodiment, the severity flag definitions may be hardwired (e.g., with an electronic e-fuse) during production of the SoC 20.

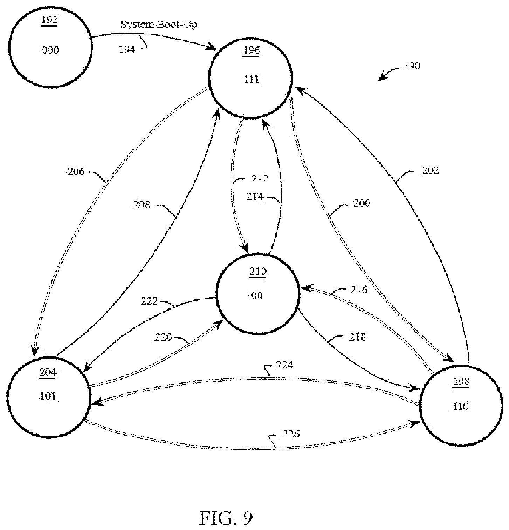

FIG. 9 shows an embodiment 190 of the operation of the PMC Core 80, illustrating the scope (e.g., a possibility of occurrence) of volt boot attacks. State transitions of the PMC core 80 are shown for three power domains 24 (see FIG. 1, 2 and 4) with a voltage scalar [V0, V1, V2] shown in each state to represent whether the operating voltage is above the lower voltage detection level (shown as "1"), or below the lower voltage detection level (shown as "0"). For ease of illustration, the V0 voltage supply is assumed to always be on or in the "1" state, which corresponds to the power domain PD0 24a of FIG. 4. Similarly, the power domains PD1 24b and PD2 24c correspond to V1 and V2 respectively. Each double wide arc shows a transition path where a volt boot attack is possible. Each single wide arc shows a transition path where a volt boot attack is not possible, nor detectable because a supply voltage is only powering up, not down.

At 192, all the voltage supplies are off. The SoC 20 executes a boot sequence at 194 to reach a "111 state" 196 (e.g. voltage scalar is "111"). For ease of illustration, the subsequently described voltage transitions will only occur with V1 and V2 of the voltage scalar [V0, V1, V2]. A transition from the 111 state 196 to the 110 state 198 by the transition 200 occurs if the power domain 24c is requested to be put in a lower voltage state. Specifically, the previous PMC state is 1,1,1 and the requested PMC state is 110. If an attacker holds the V2 voltage above the lower voltage detection threshold, then a volt boot attack may occur. Similarly, the transition 202 from the 110 state 198 back to the 111 state 196 will not result in a volt boot attack because V2 is requested to be powered up, but there is no request for powering down a voltage supply.

Similarly, the transition 206 from the 111 state 196 to a 101 state 204 may result in a volt boot attack on V1. However, the transition 208 from the 101 state 204 to the 111 state 196 will not expose the SoC 20 to a volt boot attack because no voltage is being requested to decrease, in which case the SPSD flag need not be checked. The transition 212 from the 111 state 196 to a 100 state 210 may result in a volt boot attack on V1 or V2. However, the transition 214 from the 100 state 210 to the 111 state 196 will not expose the SoC 20 to a volt boot attack. The transition 216 from the 110 state 198 to the 100 state 210 may result in a volt boot attack on V1. However, the transition 218 from the 100 state 210 to the 110 state 198 will not expose the SoC 20 to a volt boot attack. The transition 220 from the 101 state 204 to the 100 state 210 may result in a volt boot attack on V2. However, the transition 222 from the 100 state 210 to the 101 state 204 will not expose the SoC 20 to a volt boot attack. The transition 224 from the 110 state 198 to the 101 state 204 may result in a volt boot attack on V1. The transition 226 from the 101 state 204 to the 110 state 198 may also expose the SoC 20 to a volt boot attack on V2.

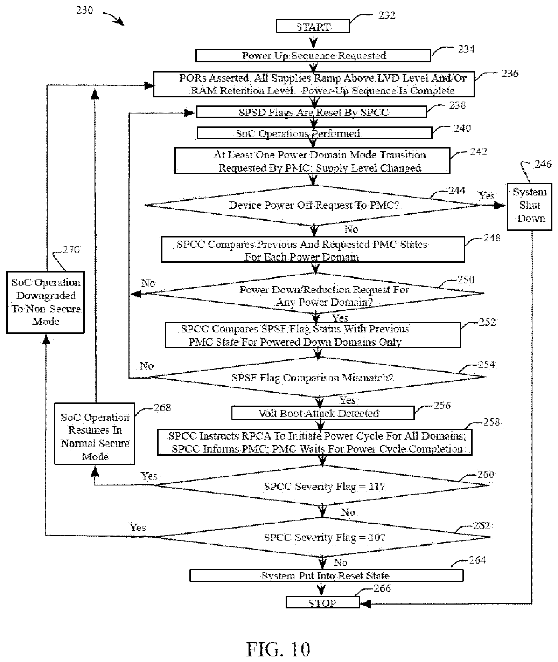

FIG. 10 shows an embodiment 230 of a method for detection and mitigation of a volt boot attack, in accordance with an embodiment of the present disclosure. With reference to FIG. 4 and FIG. 10, at 232 the method starts. At 234, a power up sequence is requested. At 236, the PORs are asserted and all supplies ramp above the LVD level (or RAM retention level). At 238, the SPSD flags are reset by the SPCC 68. At 240, the SoC 20 performs an operation to generate secure data, which the user of the SoC 20 may wish to protect. At 242, at least one power domain 24 mode transition is request by the PMC, and accordingly a voltage supply level is changed. At 244, a verification is made to determine if a device (SoC 20) power off request has been made to the PMC core 80. If a power request was made, then the system shuts down at 246, and then the method stops at 266.. Otherwise, at 248, the SPCC 68 compares the previous and requested PMC states for each power domain 24. At 250, a verification is made to determine if any power domains 24 are requested to be powered down. If no requests were made to power down a power domain 24, then the method returns to 238 to reset the SPSD flags. Otherwise, at 252 the SPCC 68 compares the SPSF 66 flag status (e.g., the requested state of each flag), with the previous state for powered down (and active) domains only. At 254, a comparison is made between the requested and previous states of the flags to determine a mismatch. If there is no mismatch, then the method returns to 238 to reset the SPSD flags. Otherwise, at 256 it is determined that a volt boot attack occurred and was detected.

At 258, the SPCC 68 instructs the RPCA 70 to initiate a power cycle for all power domains 24. The SPCC 68 informs the PMC core 80 of this instruction to the RPCA 70, and the PMC core 80 waits for the power cycle to complete. At 260, the SPCC 68 severity flag is checked to be "11". If the flag is not "11", then the severity flag is checked to be "10". At 264, if the flag is not "10" then the SoC 20 is put into the reset state, then the method stops at 266. If the SPCC 68 severity flag is set to "11" then at 268 the SoC 20 operation resumes in normal secure mode, then proceeds to 236 to reassert the PORs. If the SPCC 68 severity flag is set to "10" then at 270 the SoC 20 operation is downgraded to a non-secure mode, then proceeds to 236 to reassert the PORs.

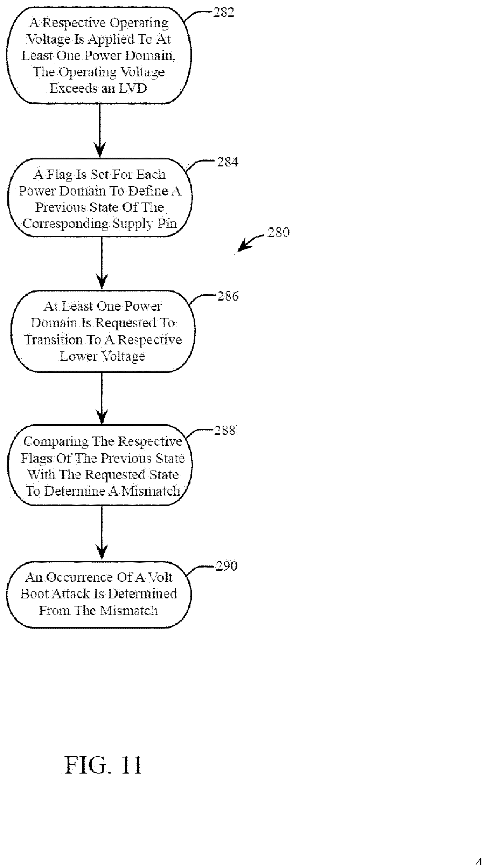

FIG. 11 shows an embodiment 280 of a method for detection and mitigation of a volt boot attack, in accordance with an embodiment of the present disclosure. With reference to FIG. 4 and FIG. 11, at 282 a respective operating voltage is applied to at least one power domain 24. The operating voltage exceeds a low voltage detection level of a respective LVD. At 284, a flag is set for each power domain to define a previous state of the corresponding supply pin. At 286, at least one power domain 24 is requested to transition to a respective lower voltage (less than the respective LVD level). At 288, the respective flag of the previous state is compared with the requested state to determine a mismatch. At 290 an occurrence of a volt boot attack is determined from the mismatch.

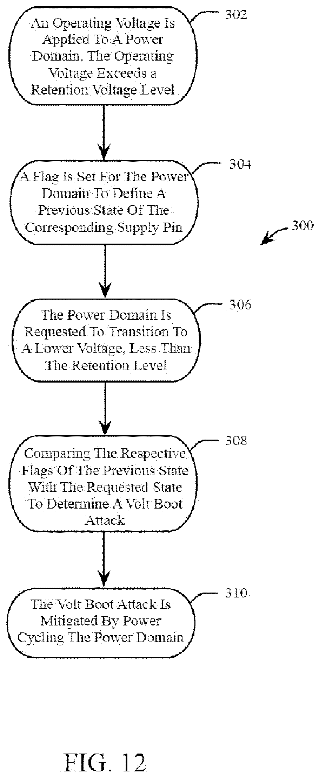

FIG. 12 shows an embodiment 300 of a method for detection and mitigation of a volt boot attack, in accordance with an embodiment of the present disclosure. With reference to FIG. 4 and FIG. 12, at 302 an operating voltage is applied to a power domain 24. The operating voltage exceeds a retention voltage level of a volatile storage element. At 304, a flag is set for the power domain to define a previous state of corresponding supply pin. At 306, the power domain 24 is requested to transition to a lower voltage, less than the retention level. At 308, the respective flag of the previous state is compared with the requested state to determine a volt boot attack. At 310, the volt boot attack is mitigated by power cycling the power domain 24.

## Claims

1. A method for detection of volt boot attacks comprising:
applying a respective operating voltage to at least one power domain, wherein each respective operating voltage exceeds a low voltage detection level of the respective power domain;
setting a flag for each of the at least one power domain, having the respective operating voltage applied, to define a previous state for each flag;
requesting the at least one power domain to transition to a respective lower voltage being less than the low voltage detection level for the respective power domain;
setting the flag for each of the at least one power domain, having the respective lower voltage applied, to define a requested state for each flag;
comparing the previous state to the requested state to determine a mismatch for each power domain; and
determining an occurrence of a volt boot attack for each power domain comprising the respective mismatch.

2. The method of claim 1 further comprising mitigating the volt boot attack by power cycling each of the at least one power domain in response to an occurrence of the volt boot attack for at least one respective power domain, wherein power cycling comprises reducing each operating voltage below the respective low voltage detection level followed by increasing each operating voltage above the respective low voltage detection level, wherein the power cycling is configured to force erasure of sensitive data.

3. The method of claim 2 wherein the operating voltage is reduced below the respective voltage detection level for a predefined period of time.

4. The method of claim 2 or 3 further comprising returning an apparatus comprising the at least one power domain to a normal mode of operation after mitigating the volt boot attack, in response to a severity flag setting.

5. The method of any of claims 2 to 4 further comprising returning an apparatus comprising the at least one power domain to a non-secure mode of operation after mitigating the volt boot attack, in response to a severity flag setting.

6. The method of any of claims 2 to 5 further comprising returning an apparatus comprising the at least one power domain in a reset mode of operation after mitigating the volt boot attack, in response to a severity flag setting.

7. The method of any preceding claim wherein applying the respective operating voltage to exceed the respective low voltage detection level comprises applying a voltage equal to or greater than a voltage level required to retain a data in a storage element powered by the respective power domain.

8. The method of any preceding claim wherein the at least one power domain comprises multiple power domains, wherein at least one of the multiple power domain powers a volatile storage element.

9. The method of any preceding claim further comprising setting an inactive flag for each of the at least one power domain not required for a normal mode of operation, and wherein comparing the flag for each of the at least one power domain transitioned to the respective lower voltage excludes each power domain comprising the respective inactive flag.

## Patentansprüche

1. Verfahren zur Detektion von Volt-Boot-Angriffen, das Folgendes umfasst:
Anlegen einer jeweiligen Betriebsspannung an mindestens einen Stromversorgungsbereich, wobei jede jeweilige Betriebsspannung einen Niedrigspannungs-Detektionspegel des jeweiligen Stromversorgungsbereichs überschreitet;
Setzen eines Kennzeichens für jeden des mindestens einen Stromversorgungsbereichs, an den die jeweilige Betriebsspannung angelegt ist, um einen vorhergehenden Zustand für jedes Kennzeichen zu definieren;
Anfordern, dass der mindestens eine Stromversorgungsbereich zu einer jeweiligen niedrigeren Spannung übergeht, die kleiner als der Niedrigspannungs-Detektionspegel für den jeweiligen Stromversorgungsbereich ist;
Setzen des Kennzeichens für jeden des mindestens einen Stromversorgungsbereichs, an den die jeweilige niedrigere Spannung angelegt ist, um einen geforderten Zustand für jedes Kennzeichen zu definieren;
Vergleichen des vorhergehenden Zustands mit dem geforderten Zustand, um eine Fehlanpassung zu bestimmen, für jeden Stromversorgungsbereich; und
Bestimmen des Auftretens eines Volt-Boot-Angriffs für jeden Stromversorgungsbereich, der die jeweilige Fehlanpassung aufweist.

2. Verfahren nach Anspruch 1, das ferner das Begrenzen des Volt-Boot-Angriffs durch Aus- und Wiedereinschalten von jedem des mindestens einen Stromversorgungsbereichs als Antwort auf das Auftreten des Volt-Boot-Angriffs für mindestens einen jeweiligen Stromversorgungsbereich umfasst, wobei das Aus- und Wiedereinschalten das Verringern jeder Betriebsspannung unter den jeweiligen Niedrigspannungs-Detektionspegel, gefolgt vom Erhöhen jeder Betriebsspannung über den jeweiligen Niedrigspannungs-Detektionspegel umfasst, wobei das Aus- und Wiedereinschalten konfiguriert ist, das Löschen sensitiver Daten zu erzwingen.

3. Verfahren nach Anspruch 2, wobei die Betriebsspannung für einen vorgegebenen Zeitraum unter den jeweiligen Spannungsdetektionspegel verringert wird.

4. Verfahren nach Anspruch 2 oder 3, das ferner das Zurückführen einer Vorrichtung, die den mindestens einen Stromversorgungsbereich umfasst, in eine reguläre Betriebsart nach dem Begrenzen des Volt-Boot-Angriffs als Antwort auf eine Einstellung eines Schweregradkennzeichens umfasst.

5. Verfahren nach einem der Ansprüche 2 bis 4, das ferner das Zurückführen einer Vorrichtung, die den mindestens einen Stromversorgungsbereich umfasst, in eine ungesicherte Betriebsart nach dem Begrenzen des Volt-Boot-Angriffs als Antwort auf eine Einstellung eines Schweregradkennzeichens umfasst.

6. Verfahren nach einem der Ansprüche 2 bis 5, das ferner das Zurückführen einer Vorrichtung, die den mindestens einen Stromversorgungsbereich umfasst, in eine Rücksetzbetriebsart nach dem Begrenzen des Volt-Boot-Angriffs als Antwort auf eine Einstellung eines Schweregradkennzeichens umfasst.

7. Verfahren nach einem der vorhergehenden Ansprüche, wobei das Anlegen der jeweiligen Betriebsspannung, derart, dass der jeweilige Niedrigspannungs-Detektionspegel überschritten wird, das Anlegen einer Spannung, die größer oder gleich einem Spannungspegel ist, der erforderlich ist, um Daten in einem Speicherelement zu halten, das durch den jeweiligen Stromversorgungsbereich mit Energie versorgt wird, umfasst.

8. Verfahren nach einem der vorhergehenden Ansprüche, wobei der mindestens eine Stromversorgungsbereich mehrere Stromversorgungsbereiche umfasst, wobei mindestens einer der mehreren Stromversorgungsbereiche ein flüchtiges Speicherelement mit Energie versorgt.

9. Verfahren nach einem der vorhergehenden Ansprüche, das ferner das Setzen eines Inaktiv-Kennzeichens für jeden des mindestens einen Stromversorgungsbereichs, der für eine reguläre Betriebsart nicht erforderlich ist, umfasst, wobei das Vergleichen des Kennzeichens für jeden des mindestens einen Stromversorgungsbereichs, der auf die jeweilige niedrigere Spannung übergegangen ist, jeden Stromversorgungsbereich ausschließt, der das jeweilige Inaktiv-Kennzeichen umfasst.

## Revendications

1. Procédé de détection d'attaques de type "Volt Boot", comprenant :
l'application d'une tension de fonctionnement respective à au moins un domaine de puissance, chaque tension de fonctionnement respective dépassant un niveau de détection de basse tension du domaine de puissance respectif ;
le réglage d'un indicateur pour chacun du ou des domaines de puissance, auquel la tension de fonctionnement respective est appliquée, pour définir un état précédent pour chaque indicateur ;
la demande à l'au moins un domaine de puissance de passer à une tension inférieure respective inférieure au niveau de détection de basse tension pour le domaine de puissance respectif ;
le réglage de l'indicateur pour chacun du ou des domaines de puissance, auquel la tension de fonctionnement respective est appliquée, pour définir un état demandé pour chaque indicateur ;
la comparaison de l'état précédent à l'état demandé pour déterminer une discordance pour chaque domaine de puissance ; et
la détermination d'une occurrence d'une attaque de type "Volt Boot" pour chaque domaine de puissance comprenant la non-concordance respective.

2. Procédé selon la revendication 1, comprenant en outre l'atténuation de l'attaque de type "Volt Boot" en effectuant un cyclage de puissance sur chacun du ou des domaines de puissance en réponse à une occurrence de l'attaque de type "Volt Boot" pour au moins un domaine de puissance respectif, le cyclage de puissance comprenant la réduction de chaque tension de fonctionnement en dessous du niveau de détection de basse tension respectif suivie par une augmentation de chaque tension de fonctionnement au-dessus du niveau de détection de basse tension respectif, le cyclage de puissance étant configuré pour forcer l'effacement des données sensibles.

3. Procédé selon la revendication 2, dans lequel la tension de fonctionnement est réduite en dessous du niveau de détection de tension respectif pendant une période de temps prédéfinie.

4. Procédé selon la revendication 2 ou 3, comprenant en outre le retour d'un appareil comprenant l'au moins un domaine de puissance à un mode de fonctionnement normal après atténuation de l'attaque de type "Volt Boot", en réponse au réglage d'un indicateur de gravité.

5. Procédé selon l'une quelconque des revendications 2 à 4, comprenant en outre le retour d'un appareil comprenant l'au moins un domaine de puissance à un mode de fonctionnement non sécurisé après atténuation de l'attaque de type "Volt Boot", en réponse au réglage d'un indicateur de gravité.

6. Procédé selon l'une quelconque des revendications 2 à 5, comprenant en outre le retour d'un appareil comprenant l'au moins un domaine de puissance à un mode de fonctionnement de réinitialisation après atténuation de l'attaque de type "Volt Boot", en réponse au réglage d'un indicateur de gravité.

7. Procédé selon l'une quelconque des revendications précédentes, dans lequel l'application de la tension de fonctionnement respective de manière à dépasser le niveau de détection de basse tension respectif comprend l'application d'une tension égale ou supérieure à un niveau de tension requis pour conserver des données dans un élément de stockage alimenté par le domaine de puissance respectif.

8. Procédé selon l'une quelconque des revendications précédentes, dans lequel l'au moins un domaine de puissance comprend de multiples domaines de puissance, au moins l'un des multiples domaines d'alimentation alimentant un élément de mémoire volatile.

9. Procédé selon l'une quelconque des revendications précédentes, comprenant en outre le réglage d'un indicateur inactif pour chacun du ou des domaines de puissance non requis pour un mode de fonctionnement normal, et dans lequel la comparaison de l'indicateur pour chacun du ou des domaines de puissance qui est passé à la tension inférieure respective exclut chaque domaine de puissance comprenant l'indicateur inactif respectif.
